**Europäisches Patentamt**

**European Patent Office**

**Office européen des brevets**

(11) Veröffentlichungsnummer: **0 472 201 A2**

# EUROPÄISCHE PATENTANMELDUNG

(21) Anmeldenummer: **91114099.4**

(51) Int. Cl.5: **G01L 9/14**

(22) Anmeldetag: **22.08.91**

(30) Priorität: **24.08.90 DE 4026855**

(43) Veröffentlichungstag der Anmeldung:
**26.02.92 Patentblatt 92/09**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Daum, Richard, Dipl.-Ing.**
**57, Rue Gaston Doumergue**
**F-31170 Tournefeuille(FR)**
Erfinder: **Schwarz, Waldemar**
**Neumarkter Strasse 7**
**W-8501 Schwarzenbruck(DE)**
Erfinder: **Schrey, Ulrich, Dr.**
**8, Place Marie Curie**
**F-31170 Tournefeuille(FR)**

(54) **Drucksensor.**

(57) Der Drucksensor (1) weist eine Membran (3) auf, die durch den zu messenden Druck ausgelenkt wird. Eine Meßschaltung (12) - die z.B. einen Hall-Sensor aufweist - mißt die Auslenkung der Membran (3) berührungslos und setzt sie in ein dem Druck proportionales Signal um. Das Gehäuse (2) des Sensors (1) ist als Drehteil ausgebildet, und die Membran (3) ist im Innern des Gehäuses (2) durch einen Sicherungsring (8) mit dazwischenliegendem Druckring (6) befestigt. Auch die anderen Bestandteile des Sensors (1) sowie ein das Gehäuse abschließender Deckel (20) sind in dem Gehäuse durch Sicherungsringe (15, 22) befestigt.

Die Erfindung betrifft einen Drucksensor nach dem Oberbegriff von Anspruch 1. Ein solcher Sensor weist eine Membran auf, die den Druck in eine linear proportionale Wegänderung umsetzt. Der Sensor enthält weitere Bauteile, insbesondere eine Meßschaltung, die die Wegänderung der Membran in ein dem zu messenden Druck proportionales Ausgangssignal umsetzen. Mit dem Sensor wird z.B. der Druck in einem Hydrauliköl, insbesondere in Kraftfahrzeugen, gemessen.

Die Montage bekannter Drucksensoren ist aufwendig: die Membran wird entweder mit einem Gehäusegrundkörper verschweißt oder mit einem massiven Innenteil durch Umbördeln eines äußeren Gehäuseteils gesichert. Eine die Meßschaltung enthaltende Leiterplatte wird mit Hilfe von Distanzbolzen oder -ringen und mit Schrauben oder durch Kleben am Innenteil befestigt. Der Anschlußstecker des Sensors wird durch Umspritzen oder mit Schrauben oder Nieten an dem Gehäusedeckel befestigt.

Der Erfindung liegt die Aufgabe zugrunde, einen einfach zu montierenden Drucksensor zu schaffen.

Diese Aufgabe wird erfindungsgemäß durch einen Drucksensor nach Anspruch 1 gelöst.

Vorteilhafte Weiterbildungen der Erfindung ergeben sich aus den weiteren Ansprüchen.

Die Vorteile der Erfindung ergeben sich insbesondere daraus, daß sämtliche Bauteile des Sensors in einem als einfaches Drehteil ausgebildeten Gehäuse untergebracht sind. Sie können in diesem Gehäuse mit geringem Arbeitsaufwand montiert werden.

Sehr zweckmäßig ist es, auf der Membran einen Permanentmagneten zu befestigen und die bei Bewegungen der Membran entstehenden Magnetfeldänderungen mit einer Hall-Sonde zu messen.

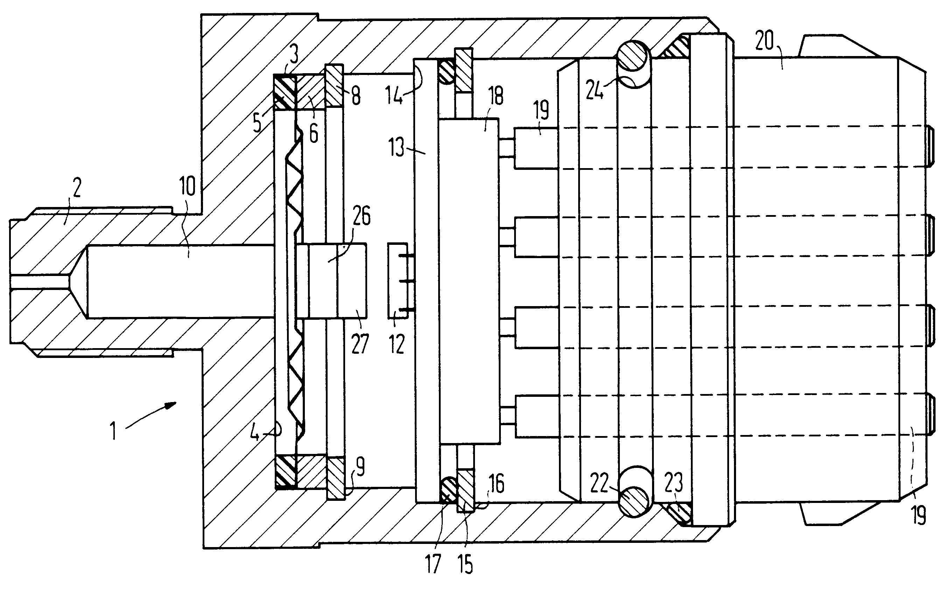

Ein Ausführungsbeispiel der Erfindung wird im folgenden anhand der Zeichnung erläutert. Die einzige Figur zeigt einen erfindungsgemäßen Drucksensor in einem Längsschnitt.

Ein Drucksensor 1 weist ein Gehäuse 2 auf, das als Drehteil aus Stahl ausgebildet ist. Eine Membran 3 ist im Bereich der vorderen - in der Zeichnung links liegenden - inneren Stirnwand 4 des Gehäuses 2 befestigt. Zwischen der Stirnwand 4 und der Membran 3 liegt eine Flachdichtung 5 aus Kunststoff. Ein Druckring 6 dient zur gleichmäßigen Verteilung der Kraft über den Umfang der Membran 3.

Ein erster Sicherungsring 8 wird nach dem Druckring 6 in das Gehäuse eingesetzt und so weit eingedrückt, bis er in eine Gehäusenut 9 einrastet. Dabei wird die Flachdichtung 5 so weit zusammengepreßt, daß die Membran 3 ordnungsgemäß gegenüber einem mit dem zu messenden Druck verbundenen Innenraum 10 des Gehäuses abgedichtet und außerdem gegen Verdrehen gesichert ist.

Eine Meßschaltung 12 ist auf einer Leiterplatte oder Platine 13 befestigt. Die Platine 13 liegt an einem Absatz 14 im Innern des Gehäuses 1 an und ist durch einen zweiten Sicherungsring 15, der in eine zweite Gehäusenut 16 eingerastet wird, befestigt. Zwischen den Absatz 14 und den Sicherungsring 15 ist ein Kunststoffring 17, z.B. ein O-Ring, eingefügt, der als Federelement und Verdrehsicherung dient.

Die Meßschaltung 12 ist über ein Flachbandkabel 18 mit vier Steckerkontakten 19 elektrisch verbunden. Die Steckerkontakte 19 sind durch Krimpen oder durch Löten an dem Flachbandkabel 18 befestigt und in einem als Steckergehäuse dienenden Deckel 20 eingerastet.

Der Deckel 20 wird mit einem dritten Sicherungsring 22 in dem Gehäuse 1 befestigt. Er wird durch einen Dichtring 23 in das Gehäuse 1 eingeschoben und so weit eingedrückt, bis der Sicherungsring 22 in einer Gehäusenut 24 einrastet. Der Sicherungsring 22 ist als Runddraht-Springring, der Dichtring 23 als O-Ring ausgebildet.

Die Meßschaltung 12 enthält hier eine als integrierte Schaltung ausgebildete Hall-Sonde, mit der das Magnetfeld eines an der Membran 3 über eine Scheibe 26 befestigten Permanentmagneten 27 gemessen wird. Durch die Membran 3 wird der in dem Innenraum 10 herrschende Druck in eine linear proportionale Auslenkung oder Wegänderung umgewandelt. Das dabei sich ändernde Magnetfeld wird mit der Hall-Sonde gemessen und in ein dem Druck proportionales Ausgangssignal umgesetzt. Die Wegänderung der Membran 3 kann aber auch nach einem anderen Meßprinzip, z.B. mit einer induktiven Sonde, gemessen und in ein Ausgangssignal umgewandelt werden.

Sobald die Platine 13 mit der Meßschaltung 12 im Innern des Gehäuses 1 befestigt ist, kann der Drucksensor elektrisch abgeglichen werden. Anschließend erfolgt die Verbindung mit dem Flachbandkabel 18 und die Montage des Deckels 20.

**Patentansprüche**

1.   Drucksensor, der eine durch den zu messenden Druck ausgelenkte Membran (3), eine die Auslenkung der Membran berührungslos fühlende und in ein dem Druck proportionales Signal umsetzende Meßschaltung (12) sowie ein als Drehteil ausgebildetes Gehäuse (2) aufweist, wobei die Membran im Innern des Gehäuses gegen eine Wand gedrückt ist,
     **dadurch gekennzeichnet**,
     - daß die Membran durch einen in eine Nut (9) einrastenden Sicherungsring (8) und einen dazwischen liegenden Druckring (6) in dem Gehäuse befestigt ist, und - daß die Meßschaltung (12) auf einer Leiterplatte (13) angeordnet und diese Leiterplatte (13) zwischen einem Absatz im Innern des Gehäuses und einem zweiten Sicherungsring (15) befestigt ist.

2. Drucksensor nach Anspruch 1, dadurch gekennzeichnet, daß zwischen der Leiterplatte (13) und dem zweiten Sicherungsring (15) ein Kunststoffring (17) angeordnet ist.

3. Drucksensor nach Anspruch 1, dadurch gekennzeichnet, daß das Gehäuse (2) mit einem Deckel (20) versehen ist, in den Steckerkontakte (19) eingerastet sind und der durch einen dritten Sicherungsring (22) in dem Gehäuse befestigt ist.